# EUROPÄISCHE PATENTSCHRIFT

(11) **EP 2 129 717 B1**
(45) Veröffentlichungstag und Bekanntmachung des Hinweises auf die Patenterteilung: **14.11.2012**
(21) Anmeldenummer: 08716975.1
(22) Anmeldetag: 20.02.2008
(51) Int. Cl.: C08K 5/05, C08L 27/06

(54) **GEMISCHE VON N-ALKANOLEN UND IHRE VERWENDUNG**
MIXTURES OF N-ALKANOLS AND THEIR USE
MÉLANGES DE N-ALCOOLS ET LEUR UTILISATION

(30) Priorität: 23.02.2007 EP 07003746
(43) Veröffentlichungstag der Anmeldung: 09.12.2009
(73) Patentinhaber: BASF SE, 67056 Ludwigshafen (DE)
(72) Erfinder: WEBER, Dieter, 67454 Hassloch (DE); METZGER, Ulrich, 68307 Mannheim (DE)
(86) Internationale Anmeldenummer: PCT/EP2008/052066
(87) Internationale Veröffentlichungsnummer: WO 2008/101956

(56) Entgegenhaltungen:
- EP-A- 0 335 239
- EP-A- 0 900 821
- EP-A- 1 595 916
- US-A- 4 544 694
- US-A1- 2005 267 091
- US-A1- 2006 020 044

## Beschreibung

Die vorliegende Erfindung betrifft die Verwendung von Gemischen, umfassend insgesamt mindestens 50 Gew.-% an n-Alkanolen, gewählt aus n-C₂₄-C₃₄-Alkanolen, als Zusatz bei der Verarbeitung von thermoplastischen Polymerenen einem Kneter, Extruder oder Mischwalzwerk

Bei der Verarbeitung von thermoplastischen Polymeren, beispielsweise durch Mischwalzwerke, insbesondere durch Extrusion mit Hilfe von beispielsweise Folienextrudern oder Einschnecken- oder Doppelschneckenextrudern oder Planetenwalzwerken, werden je nach zu verarbeitendem Polymer unterschiedliche Verarbeitungshilfsmittel zugesetzt. So ist es im Falle von Polypropylen üblich, Antiblockiermittel zuzusetzen. Im Falle von Polyvinylchlorid (PVC) setzt man üblicherweise zahlreiche Verarbeitungsmittel zu, insbesondere ein oder mehrere Gleitmittel.

Das oder die eingesetzten Verarbeitungshilfsmittel müssen üblicherweise eine Reihe von anspruchsvollen Anforderungen erfüllen. So sollen Verarbeitungsmittel nicht nur die Verarbeitung erleichtern und gut dosierbar sein. Sie sollen weiterhin im betreffenden Polymer keine nachteiligen Nebenwirkungen verursachen, beispielsweise Ausblühungen (englisch: plateout). Im Falle von transparenten Kunststoffen sind als unerwünschte Nebenwirkungen Eintrübungen zu vermeiden. Schließlich sollen Verarbeitungsmittel leicht in großen Mengen herzustellen sein.

Es ist aus US 4,132,691 bekannt, partiell oxidiertes Polyethylenwachs zur Verarbeitung von PVC einzusetzen, und zwar als Gleitmittel. Partiell oxidiertes Polyethylenwachs führt jedoch in der Regel zu einer Eintrübung des verarbeiteten Polymers, so dass das betreffende Polymer sich nur schlecht für Zwecke handelt, bei denen es auf die Durchsichtigkeit (Transparenz) ankommt.

Es bestand also die Aufgabe, Substanzen bereit zu stellen, die man bei der Verarbeitung von thermoplastischen Polymeren, insbesondere von PVC einsetzen kann und mit deren Hilfe man Polymere verarbeiten kann. Weiterhin bestand die Aufgabe, ein Verfahren zur Verarbeitung von thermoplastischen Polymeren bereit zu stellen. Schließlich bestand die Aufgabe, verarbeitete thermoplastische Polymere bereit zu stellen, insbesondere solche mit großer Transparenz (Durchsichtigkeit).

Dementsprechend wurde die eingangs definierte Verwendung von Gemischen gefunden, umfassend insgesamt mindestens 50 Gew.-%, bevorzugt mindestens 85 Gew.-% an n-Alkanolen, gewählt aus n-C₂₄-C₃₄-Alkanolen.

Ebenso wurde ein Verfahren zur Verarbeitung von thermoplastischen Polymeren unter Verwendung von Gemischen gefunden, die mindestens 50 Gew.-%, bevorzugt mindestens 85 Gew.-% an n-Alkanolen umfassen, die aus C₂₄-C₃₄-Alkanolen gewählt sind.

Dabei sind Angaben in Gew.-% jeweils auf die Gesamtmenge an Gemisch bezogen.

Bei den vorstehend genannten Gemischen, die im Rahmen der vorliegenden Erfindung auch als Alkanolgemische bezeichnet werden, handelt es sich um solche Gemische, die zu mindestens 50 Gew.-%, bevorzugt mindestens 85 Gew.-% aus n-Alkanolen, also primären unverzweigten aliphatischen Alkoholen, mit 24 bis 34 C-Atomen bestehen. Vorzugsweise bestehen die Alkanolgemische hauptsächlich aus n-Alkanolen mit einer geraden Anzahl von C-Atomen.

In einer bevorzugten Ausführungsform der vorliegenden Erfindung enthalten Alkanolgemische insgesamt mindestens 75 Gew.-% an n-C₂₈H₅₇-OH und n-C₃₀H₆₁-OH.

In einer besonders bevorzugten Ausführungsform der vorliegenden Erfindung enthalten Alkanolgemische
im Bereich von 63 bis 67 Gew.-%, insbesondere 65 Gew.-% Octacosanol (n-C₂₈H₅₇-OH),
im Bereich von 10 bis 15 Gew.-%, insbesondere 12 Gew.-% Triacontanol (n-C₃₀H₆₁-OH),
im Bereich von 5 bis 10 Gew.-%, insbesondere 7 Gew.-% Hexacosanol (n-C₂₆H₅₃-OH).

Weiterhin können Alkanolgemische insgesamt 5 bis 22 Gew.-%, bevorzugt insgesamt 7 bis 20 Gew.-%, besonders bevorzugt insgesamt 10 bis 15 Gew.-% weitere n-Alkanole enthalten, beispielsweise Tetracosanol (n-C₂₄H₄₉-OH), Heptacosanol (n-C₂₇H₅₅-OH), Nonacosanol (n-C₂₉H₅₉-OH), Dotriacosanol (n-C₃₂H₆₅-OH) und Tetratriacontanol (n-C₃₄H₆₉-OH).

Alkanolgemische können als weitere Bestandteile eine oder mehrere organische Substanzen enthalten, beispielsweise Fettsäuren, gesättigt oder ungesättigt, Fettsäureester von einem oder mehreren der vorstehend genannten n-Alkanole, Zucker oder ein oder mehrere Proteine.

Erfindungsgemäß verwendete Alkanolgemische lassen sich beispielsweise durch Vermischen der eingesetzten n-Alkanole herstellen. Weiterhin ist es möglich, erfindungsgemäß verwendete Alkanolgemische durch gemeinsame Reduktion von Gemischen der korrespondierenden Fettsäuren herzustellen.

In einer speziellen Ausführungsform der vorliegenden Erfindung handelt es sich bei erfindungsgemäß verwendeten Alkanolgemischen um sogenanntes Policosanol. Policosanol lässt sich beispielsweise durch Extraktion und vorzugsweise einen oder mehrere weitere Aufreinigungsschritte aus Zuckerrohrwachs gewinnen. Beispielsweise lässt sich Policosanol durch Extraktion mit Isopropanol und anschließende Aufreinigung gewinnen. Als Aufreinigungsschritte sind Beispielsweise eine oxidative Aufarbeitung mit anorganischem oder organischem Peroxid oder mit Cr(VI)-Verbindungen geeignet, weiterhin Filtration, insbesondere Filtration über Kieselgel oder Aluminiumoxid. Weitere geeignete Aufarbeitungsschritte sind das Umkristallisieren aus Paraffinen, einfach oder fraktioniert, beispielsweise aus n-Heptan und insbesondere Cyclohexan oder n-Hexan.

Der Begriff thermoplastische Polymere schließt im Rahmen der vorliegenden Erfindung nicht nur Homopolymere, sondern auch Copolymere, Terpolymere etc. mit ein, die jeweils thermoplastische Eigenschaften haben. Dabei kann es bei Copolymeren um statistische Copolymere, Blockcopolymere und Pfropfcopolymere handeln.

Beispiele für thermoplastische Polymere im Rahmen der vorliegenden Erfindung sind Polyolefine wie beispielsweise Polyethylen und Polypropylen, weiterhin Polyaromaten wie beispielsweise Polystyrol und Styrolcopolymere wie beispielsweise SAN oder ASA, weiterhin Polycarbonate, Polymethylmethacrylat (PMMA), Polyamide, Polyester, bevorzugt sind halogenierte thermoplastische Polymere wie Polyvinylchlorid (PVC) und ganz besonders bevorzugt Hart-PVC. Bei dem PVC kann es sich um durch Emulsionspolymerisation (E-PVC mit einem mittleren Partikeldurchmesser von 1 bis 2 µm), durch Suspensionspolymerisation (S-PVC mit einem mittleren Partikeldurchmesser von 50 bis 200 µm), durch Suspensionspolymerisation unter Emulgator-Zusatz (MS-PVC mit einem mittleren Partikeldurchmesser von 5 bis 10 µm) oder Massepolymerisation hergestelltes PVC (M-PVC) handeln.

Besonders bevorzugt sind transparente thermoplastische Polymere wie transparentes Polystyrol, transparentes Polycarbonat und insbesondere transparentes Polyvinylchlorid.

Das erfindungsgemäße Verfahren geht aus von thermoplastischem Polymer, bevorzugt festem thermoplastischem Polymer, besonders bevorzugt festem Polyvinylchlorid, insbesondere Hart-PVC. Ganz besonders bevorzugt ist Hart-PVC mit einem K-Wert im Bereich von 55 bis 70, bestimmt bei 25°C an einer Lösung von 1 g reinem Polyvinylchlorid in Cyclohexanon, im Rahmen der vorliegenden Erfindung auch Hart-PVC genannt. Polyvinylchlorid wird durch Polymerisation von Vinylchlorid beispielsweise in Masse, in Suspension oder in Emulsion und gegebenenfalls Vermischen mit einem oder mehreren Weichmachern hergestellt. Der Anteil an Weichmacher kann im Bereich von 0,01 bis 12 phr (parts per hundred resin) liegen, bevorzugt 0,1 bis 8 phr, wobei parts im Rahmen der vorliegenden Erfindung für Gewichtsteile steht und resin für reines Polyvinylchlorid. Unter "reinem Polyvinylchlorid" wird dabei das betreffende Polyvinylchlorid ohne jegliche bei der Verarbeitung eingesetzte Additive wie beispielsweise Weichmacher, Stabilisatoren, Hilfsmittel aus der PVC-Synthese wie beispielsweise Schutzkolloide oder Emulgatoren, UV-Stabilisatoren oder Gleitmittel verstanden. Thermoplastische Polymere können einen oder mehrere Zusätze enthalten, beispielsweise Antiblockmittel oder Antioxidantien.

PVC und insbesondere Hart-PVC enthalten in der Regel einen oder mehrere Zusätze wie beispielsweise Weichmacher. Geeignete Weichmacher, die in Polyvinylchlorid und insbesondere in Hart-PVC enthalten sein können, sind beispielsweise Dicarbonsäuredialkylester, Dicarbonsäuredibenzylester, Phosphorsäuretriester, Tricarbonsäuretriester und epoxidierte Öle und Ester.

Beispiele für geeignete Dicarbonsäuredialkylester sind insbesondere Adipinsäuredi-(2-ethylhexyl)-ester, Azelainsäuredi-(2-ethylhexyl)-ester und Sebacinsäuredi-(2-ethylhexyl)-ester, Phthalsäuredi-(2-ethylhexyl)-ester, Terephthalsäuredi-(2-ethylhexyl)-ester, Phthalsäurediisooctylester, Phthalsäurediisononylester, Phthalsäurediisodecylester, Phthalsäuredi-n-tridecylester, Phthalsäuredi-n-undecylester, Phthalsäurediester von linearen C₇-C₁₁-Alkanolgemischen (kurz 711-Phthalate genannt), Phthalsäure-n-butylbenzylester und Phthalsäure-n-butyl-n-octylester.

Beispiele für geeignete Phosphorsäuretriester sind insbesondere Tri-n-octylphosphat, Kresyldiphenylphosphat, Triphenylphosphat, Trikresylphosphat und Tri-(2-ethylhexyl)-phosphat.

Beispiele für geeignete Tricarbonsäuretriester sind beispielsweise Citronensäuretri-C₆-C₁₁-alkylester, 1,2,4-Benzoltricarbonsäuretriester (Trimellithsäuretriester, Trimellithsäureester), insbesondere 1,2,4-Benzoltricarbonsäuretriester-tri-(2-ethylhexyl)-ester und 1,2,4-Benzoltricarbonsäuretriestertriiosooctylester.

Beispiele für geeignete epoxidierte Öle und Ester sind insbesondere epoxidiertes Sojabohnenöl, epoxidiertes Leinsamenöl und Epoxystearat.

Beispiele für polymere Weichmacher sind Polyester, erhältlich durch Kondensation von aliphatischen Dicarbonsäuren wie beispielsweise Acelainsäure oder Sebacinsäure mit aliphatischen α,ω-Diolen wie beispielsweise 1,6-Hexandiol oder 1,4-Butandiol.

Hart-Polyvinylchlorid im Sinne der vorliegenden Erfindung umfasst nicht nur Homopolymere des Vinylchlorids, sondern auch Copolymere von Vinylchlorid mit 0-30 % eines anderen Monomeren, z.B. Vinylacetat oder Acrylat wie beispielsweise Methylacrylat, ferner nachchloriertes PVC, bei der das betreffende Homopolymere des Vinylchlorids mit Chlor nachbehandelt wird (sogenanntes C-PVC) und bei dem somit der Chlorgehalt höher ist als bei sogenanntem unbehandelten PVC. C-PVC hat einen höheren Erweichungspunkt als unbehandeltes PVC.

Im erfindungsgemäßen Verfahren eingesetztes Polyvinylchlorid hat einen K-Wert im Bereich von 55 bis 70, bestimmt bei 25°C an einer Lösung von 1 g reinem Polyvinylchlorid in Cyclohexanon.

In einer Ausführungsform der vorliegenden Erfindung weist im erfindungsgemäßen Verfahren eingesetztes Polyvinylchlorid Verzweigungen auf, und zwar etwa 3 bis 10 Verzweigungen pro 1000 C-Atomen.

In einer Ausführungsform der vorliegenden Erfindung liegt im erfindungsgemäßen Verfahren eingesetztes Polyvinylchlorid in partikulärer Form vor, beispielsweise als Pulver oder als Granulat.

Polyvinylchlorid kann einen oder mehrere weitere Zusätze enthalten. Beispiele für weitere geeignete Zusätze sind anorganische oder organische Stabilisatoren, Co-Stabilisatoren, UV-Stabilisatoren wie beispielsweise Hydroxybenzophenone, Antistatika, Biostabilisatoren wie Fungizide, Bacterizide und Algicide, Anti-Oxidantien wie z.B. lonol, Bisphenol A, sterisch gehinderte Amine wie beispielsweise sogenannte HALS-Verbindungen, Pigmente wie z.B. TiO₂, Ruß, Fe₃O₄, Fe₂O₃, Mono-Azopigmente, Phthalocyanine, Farbstoffe wie z. B. Azofarbstoffe, Anthracen, optische Aufheller, Füllstoffe wie z.B. Kreide, Dolomite, Ruße, Silikate, Kaolin, Talk, Asbest, Wollastonite, SiO₂, Aluminiumhydroxide, Holzmehl, Glasfasern, weiterhin Treibmittel, Kicker, Inhibitoren, Lichtstabilisatoren, Hitzestabilisatoren, Schlagzähmodifikatoren. An geeigneten anorganischen Stabilisatoren sind beispielsweise Metallseifen wie z. B. Salze von Barium, Blei, Zinn und Calcium, weiterhin Dibutyl- und Dioctylzinnverbindungen zu nennen. Als Blei-Stabilisatoren sind insbesondere 2 PbO·PbHPO₃, 3 PbO·PbSO₄, 4 PbO·PbSO₄, x PbO·PbY, wobei x eine ganze Zahl im Bereich von 1 bis 4 und bevorzugt 2 ist und Y gewählt wird aus Maleat, Fumarat, Phthalat, Salicylat, Stearat, Pb[St]₂ mit St = Stearat, bevorzugt 4 PbO·PbSO₄, PbCO₃, Pb[St]₂ und x PbO·PbY. Als Zinn-Stabilisatoren sind insbesondere (CH₃)₂Sn(S-CH₂CH₂-O-CO-C₁₁H₂₃)₂, n-BuₓSn(S-CH₂CH₂-O-C₈H₁₇)₄₋ₓ, (iso-C₈H₁₇)ₓSn(S-CH₂CH₂-O-CO-C₈H₁₇)₄₋ₓ, n-Bu₂Sn[St]₂, n-Bu₂Sn-maleat, n-Bu₂Sn(O-CO-C₁₁H₂₃)₂ geeignet.

Als Ca/Zn-Stabilisator ist beispielsweise Ca/Zn-Stearat geeignet und Zn(O-CO-R)₂ + Ca(O-CO-R)Cl, wobei R gewählt wird aus n-C₁₇H₃₅ und n-C₁₁H₂₃. Geeignete organische Stabilisatoren sind z. B. Uracile, Aminocrotonate, Dihydropyridine, Harnstoffe oder 2-Phenylindol. Beispiele für geeignete Co-Stabilisatoren sind β-Dicarbonylverbindungen.

Das erfindungsgemäße Verfahren wird in einem Kneter, Extruder oder Mischwalzwerk durchgeführt, bevorzugt in einem Extruder.

In einer Ausführungsform der vorliegenden Erfindung vermischt man thermoplastisches Polymer und insbesondere PVC mit weiteren Zusätzen, und zwar vor, während oder nach dem Verarbeiten mit Alkanolgemisch. Geeignete Zusätze sind beispielsweise anorganische oder organische Stabilisatoren, Co-Stabilisatoren, UV-Stabilisatoren wie beispielsweise Hydroxybenzophenone, Antistatika, Biostabilisatoren, Anti-Oxidantien, Pigmente, Farbstoffe, Füllstoffe, Treibmittel, Kicker, Inhibitoren, Lichtstabilisatoren, Hitzestabilisatoren, Schlagzähmodifikatoren.

In einer Ausführungsform der vorliegenden Erfindung extrudiert oder knetet man zum Zweck des Vermischens. Zum Extrudieren kann man beispielsweise einen Einschneckenextruder oder einen Zweischneckenextruder einsetzen. Das Extrudieren kann man beispielsweise im Falle von PVC als thermoplastischem Polymer bei Temperaturen bis zu 190°C durchführen. Wünscht man ein anderes thermoplastisches Polymer zu verarbeiten, so kann man entsprechend dem Schmelzpunkt eine andere Verarbeitungstemperatur wählen.

In einer Ausführungsform der vorliegenden Erfindung extrudiert man und stellt Profile, bevorzugt Fensterprofile, oder Rohre her. In einer bevorzugten Ausführungsform der vorliegenden Erfindung extrudiert man und stellt eine oder mehreren Folien her. In einer anderen bevorzugten Ausführungsform der vorliegenden Erfindung extrudiert man und stellt Hohlkörper wie beispielsweise Flaschen her.

In einer Ausführungsform der vorliegenden Erfindung extrudiert man zum Zweck des Vermischens und stellt dann mit Hilfe einer Spritzgussmaschine Spritzgussteile her, beispielsweise gekrümmte Rohrübergänge oder gekrümmte Rohrverbindungsstücke.

In einer bevorzugten Ausführungsform der vorliegenden Erfindung kalandriert man zum Zweck des Vermischens und stellt beispielsweise Platten oder Filme oder Folien, insbesondere transparente Filme oder Folien, her.

In einer Ausführungsform der vorliegenden Erfindung knetet man nach dem oben beschriebenen Vermischen, im Falle von PVC als thermoplastischem Polymer beispielsweise bei einer Temperatur im Bereich von 150 bis 190°C. Wünscht man ein anderes thermoplastisches Polymer zu verarbeiten, so kann man entsprechend dem Schmelzpunkt eine andere Verarbeitungstemperatur wählen.

Ein weiterer Gegenstand der vorliegenden Erfindung sind verarbeitete thermoplastische Polymere, insbesondere PVC, enthaltend im Bereich von 0,01 bis 1 Gew.-%, bevorzugt im Bereich von 0,1 bis 0,5 Gew.-% Gemisch, umfassend insgesamt mindestens 50 Gew.-% an n-Alkanolen, gewählt aus n-C₂₄-C₃₄-Alkanolen, im Rahmen der vorliegenden Erfindung auch Alkanolgemisch genannt. Alkanolgemische sind vorstehend definiert.

In einer Ausführungsform der vorliegenden Erfindung handelt es sich bei Alkanolgemischen um solche, die insgesamt mindestens 75 Gew.-% an n-C₂₈H₅₇-OH und n-C₃₀H₆₁-OH enthalten, bezogen auf das Alkanolgemisch. Besonders bevorzugt handelt es sich bei Alkanolgemischen um Policosanol.

Erfindungsgemäße verarbeitete thermoplastische Polymere und insbesondere erfindungsgemäßes PVC zeigen eine sehr gute Transparenz und sind sehr gut zur Herstellung von flächigen Körpern oder Hohlkörpern wie beispielsweise Flaschen geeignet, insbesondere zur Herstellung von transparenten Platten oder Filmen.

Ein weiterer Gegenstand der vorliegenden Erfindung sind Profile, insbesondere Fensterprofile, weiterhin Folien oder Spritzgussteile, erhältlich aus erfindungsgemäßem verarbeitetem thermoplastischem Polymer und insbesondere aus erfindungsgemäßem verarbeitetem Polyvinylchlorid.

Ein weiterer Gegenstand der vorliegenden Erfindung ist die Verwendung von erfindungsgemäßen verarbeiteten thermoplastischen Polymeren zur Herstellung von flächigen Körpern oder von Hohlkörpern.

Ein weiterer Gegenstand der vorliegenden Erfindung ist die Verwendung von erfindungsgemäßen verarbeiteten thermoplastischen Polymeren zur Herstellung von Profilen, insbesondere von Fensterprofilen.

Die Erfindung wird durch Arbeitsbeispiele erläutert.

### I. Gewinnung von Policosanol

Policosanol wurde gewonnen durch Extraktion von Zuckerrohrabfällen mit Isopropanol und anschließender Umkristallisation aus n-Hexan. Man erhielt eine hellgraue pulverige Masse (etwa 1 kg/Tonne Zuckerrohr). Das so erhältliche Policosanol enthielt 66 Gew.-% Octacosanol, 12 Gew.-% Triacontanol, 7 Gew.-% Hexacosanol, weiterhin jeweils weniger als 5 Gew.-% Tetracosanol, Heptacosanol, Nonacosanol, Dotriacosanol und Tetratriacontanol.

### II. Verarbeitung von Hart-Polyvinylchlorid

Als Hart-Polyvinylchlorid wurde jeweils ein PVC mit einem K-Wert von 68 eingesetzt, im Folgenden auch (PVC.1) genannt.

In einem Henschelmischer wurden jeweils bei 20°C zusammengegeben und miteinander vermischt (4.000 U/min):
100 phr (PVC.1), 1 phr Methylmethacrylat mit einem K-Wert von 115 (kommerziell erhältlich als Vinuran® 3833), 3 phr einer 1:1-Mischung (Molverhältnis) Ca/Zn-Stearat, 0,8 phr Phthalsäuredi-n-C₁₆-alkylester, 0,25 phr ω-Hydroxystearinsäure und Policosanol aus Beispiel I. gemäß Tabelle 1. Die Temperatur stieg während des Vermischens auf 120°C. Man rührte etwa 5 Minuten bei 120°C, wobei man die Rührerdrehzahl so weit verringerte, dass die Temperatur konstant blieb, und ließ dann auf Zimmertemperatur abkühlen. Anschließend wurde jeweils geknetet mit einem Walzenkneter der Fa. Brabender (Typ Plasti-Corder W 50). Knettemperatur 160°, Gewichts-Auflage 5 kp, Drehzahl 40 U/min.

Die Plastifizierzeit ist jeweils in Minuten bestimmt.

**Tabelle 1: Plastifizierzeiten von erfindungsgemäßem Hart-PVC und Vergleichs-PVC in Minuten**

| | | |
|---|---|---|
| Policosanol bzw. Oxidat/phr | 0,3 | 0,6 |
| Ca/Zn-stabilisiertes (PVC.1) | 10,5 | 14,0 |
| Ca/Zn-stabilisiertes (V-PVC.2) | 11,0 | 14,5 |
| Ca/Zn-stabilisiertes (V-PVC.3) | 12,0 | 15 |
| Sn-stabilisiertes (PVC.1) | 1,25 | 2 |
| Sn-stabilisiertes (V-PVC.2) | 3,0 | 3,75 |
| Sn-stabilisiertes (V-PVC.3) | 3,75 | 4,5 |

Vergleichsversuche wurden jeweils mit einem Vergleichs-PVC, kurz: (V-PVC.2) durchgeführt, das statt Policosanol ein partiell oxidiertes homopolymeres Polyethylen ("Oxidat") mit einem Schmelzpunkt von 102°C, einer Dichte von 0,95 g/cm³, Mₙ 5.400 g/mol, einer kinematischen Schmelzviskosität v bei 120°C von 320 mm²/s und einer Säurezahl von 17 mg KOH/g enthielt. Ein derartiges partiell oxidiertes homopolymeres Polyethylen wurde hergestellt durch partielle Luft-Oxidation von einem homopolymeren Polyethylen mit einem Schmelzpunkt von 108°C, einer Dichte von 0,92 g/cm³ und Mₙ 5.400 g/mol.

Weitere Vergleichsversuche wurden jeweils mit einem weiteren Vergleichs-PVC, kurz: (V-PVC.3) durchgeführt, das statt Policosanol ein partiell oxidiertes homopolymeres Polyethylen ("Oxidat") mit einem Schmelzpunkt von 103°C, einer Dichte von 0,96 g/cm³, Mₙ 2.800 g/mol, einer kinematischen Schmelzviskosität v bei 120°C von 310 mm²/s und einer Säurezahl von 23 mg KOH/g, enthielt. Ein derartiges partiell oxidiertes homopolymeres Polyethylen wurde hergestellt durch partielle Luft-Oxidation von einem homopolymeren Polyethylen mit einem Schmelzpunkt von 108°C, einer Dichte von 0,92 g/cm³ und Mₙ 5.400 g/mol.

**Tabelle 2: Drehmoment von erfindungsgemäßem Hart-PVC und Vergleichs-PVC in Nm**

| | | |
|---|---|---|
| Policosanol bzw. Oxidat/phr | 0,3 | 0,6 |
| Ca/Zn-stabilisiertes (PVC.1) | 48 | 45 |
| Ca/Zn-stabilisiertes (V-PVC.2) | 49 | 46 |
| Ca/Zn-stabilisiertes (V-PVC.3) | 49 | 48 |
| Sn-stabilisiertes (PVC.1) | 70 | 82 |
| Sn-stabilisiertes (V-PVC.2) | 67 | 61 |
| Sn-stabilisiertes (V-PVC.3) | 55 | 71 |

Das Drehmoment wurde mit einem Brabender-Plastographen der Fa. Brabender OHG, Duisburg, bestimmt, beschrieben bei G. Biedenkopf, Kunststoff und Gummi, 5. Jahrgang, 1966/67, Krausskopf-Verlag.

Die Transparenz von erfindungsgemäßem Polyvinylchlorid, basierend auf Ca/Znstabilisiertem (PVC.1) bzw. Sn-stabilisiertem (PVC.1), war jeweils hervorragend, während Ca/Zn-stabilisiertes (V-PVC.2) und Sn-stabiliertes (V-PVC.2) eine deutliche Trübung aufwiesen.

Die Transparenz wurde mittels einer Ulbricht-Kugel gemessen und ist in Tabelle 3 aufgeführt.

**Tabelle 3: Transparenz**

| | | |
|---|---|---|
| Policosanol bzw. Oxidat/phr | 0,3 | 0,6 |
| Ca/Zn-stabilisiertes (PVC.1) | 99 | 97 |
| Ca/Zn-stabilisiertes (V-PVC.2) | 88 | 68 |
| Ca/Zn-stabilisiertes (V-PVC.3) | 89 | 75 |
| Sn-stabilisiertes (PVC.1) | 100 | 98 |
| Sn-stabilisiertes (V-PVC.2) | 90 | 72 |
| Sn-stabilisiertes (V-PVC.3) | 91 | 73 |

## Patentansprüche

1. Verwendung von Gemischen, umfassend insgesamt mindestens 50 Gew.-% an n-Alkanolen, gewählt aus n-C₂₄-G₃₄-Alkanolen, als Zusatz bei der Verarbeitung von thermoplastischen Polymeren in einem Kneter, Extruder oder Mischwalzwerk.

2. Verfahren zur Verarbeitung in einem Kneter, Extruder oder Mischwalzwerk von thermoplastischen Polymeren unter Verwendung von Gemischen, umfassend mindestens 50 Gew,-% an n-Alkanolen, gewählt aus n-C₂₄-C₃₄-Alkanolen.

3. Verfahren nach Anspruch 2, **dadurch gekennzeichnet, dass** es sich bei thermoplastischen Polymeren um PVC handelt.

4. Verfahren nach Anspruch 2 oder 3, **dadurch gekennzeichnet, dass** die verwendeten Gemische insgesamt mindestens 75 Gew.-% an n-C₂₈H₅₇-OH und n-C₃₀H₆₁-OH enthalten.

5. Verfahren nach einem der Ansprüche 2 bis 4, **dadurch gekennzeichnet, dass** es sich bei dem verwendeten Gemisch, um Policosanol handelt.

6. Verarbeltete thermoplastische Polymere, enthaltend Im Bereich von 0,01 bis 1 Gew.-% Gemisch, wobei das Gemisch insgesamt mindestens 50 Gew.-% an n-Alkanolen, gewählt aus n-C₂₄-C₃₄-Alkanolen umfasst.

7. Verarbeitete thermoplastische Polymere nach Anspruch 6. **dadurch gekennzeichnet, dass** es sich bei ihnen um PVC handelt.

8. Verarbeitete thermoplastische Polymere nach Anspruch 6 oder 7, **dadurch gekennzeichnet, dass** die verwendeten Gemische insgesamt mindestens 75 Gew.-% an n-C₂₈H₅₇-OH und n-C₃₀H₆₁-OH enthalten.

9. Verarbeitete thermoplastische Polymere nach einem der Ansprüche 6 bis 8, dadurch gekenntzeichnet, dass es sich bei dem verwendeten Gemisch um Policosanol handelt.

10. Verwendung von verarbeiteten thermoplastischen Polymeren nach einem der Ansprüche 6 bis 9 zur Herstellung von flächigen Körpern.

11. Verwendung von verarbeiteten thermoplastischen Polymeren nach einem der Ansprüche 6 bis 9 zur Herstellung von Hohlkörpern.

12. Verwendung von verarbeiteten thermoplastischen Polymeren nach einem Ansprüche 6 bis 9 zur Herstellung von Profilen.

## Claims

1. The use of mixtures, comprising a total of at least 50% by weight of n-alkanols, selected from n-C₂₄-C₃₄ alkanols, as additive in the processing of thermoplastic polymers in a kneader, or extruder, or on mixing rolls.

2. A process for the processing in a kneader, or extruder, or on mixing rolls of thermoplastic polymers using mixtures, comprising at least 50% by weight of n-alkanols, selected from n-C₂₄-C₃₄ alkanols.

3. The process according to claim 2, wherein the thermoplastic polymer is PVC.

4. The process according to claim 2 or 3, wherein the mixtures used comprise a total of at least 75% by weight of n-C₂₈H₅₇-OH and n-C₃₀H₆₁-OH.

5. The process as claimed in any of claims 2 to 4, wherein the mixture used is policosanol.

6. A processed thermoplastic polymer, comprising an amount in the range from 0.01 to 1% by weight of mixture, the mixture comprising a total of at least 50% by weight of n-alkanols, selected from n-C₂₄-C₃₄ alkanols.

7. The processed thermoplastic polymer according to claim 6, which is PVC.

8. The processed thermoplastic polymer according to claim 6 or 7, wherein the mixtures used comprise a total of at least 75% by weight of n-C₂₈H₅₇-OH and n-C₃₀H₆₁-OH.

9. The processed thermoplastic polymer according to any of claims 6 to 8, wherein the mixture used is policosanol.

10. The use of processed thermoplastic polymers according to any of claims 6 to 9 for the production of sheet-like products.

11. The use of processed thermoplastic polymers according to any of claims 6 to 9 for the production of hollow products.

12. The use of processed thermoplastic polymers according to any of claims 6 to 9 for the production of profiles.

## Revendications

1. Utilisation de mélanges, comprenant au total au moins 50 % en poids de n-alcanols, choisis parmi les n-alcanols en C₂₄-C₃₄, en tant qu'additif lors de l'usinage de polymères thermoplastiques dans un malaxeur, une extrudeuse ou un laminoir de mélange.

2. Procédé d'usinage dans un malaxeur, une extrudeuse ou un laminoir de mélange de polymères thermoplastiques utilisant des mélanges comprenant au moins 50 % en poids de n-alcanols, choisis parmi les n-alcanols en C₂₄-C₃₄.

3. Procédé selon la revendication 2, **caractérisé en ce que** les polymères thermoplastiques consistent en du PVC.

4. Procédé selon la revendication 2 ou 3, **caractérisé en ce que** les mélanges utilisés contiennent au total au moins 75 % en poids de n-C₂₈H₅₇-OH et de n-C₃₀H₆₁-OH.

5. Procédé selon l'une quelconque des revendications 2 à 4, **caractérisé en ce que** le mélange utilisé consiste en du policosanol.

6. Polymères thermoplastiques usinés, contenant dans la plage allant de 0,01 à 1 % en poids d'un mélange, le mélange comprenant au total au moins 50 % en poids de n-alcanols, choisis parmi les n-alcanols en C₂₄-C₃₄.

7. Polymères thermoplastiques usinés selon la revendication 6, **caractérisés en ce que** ceux-ci consistent en du PVC.

8. Polymères thermoplastiques usinés selon la revendication 6 ou 7, **caractérisés en ce que** les mélanges utilisés contiennent au total au moins 75 % en poids de n-C₂₈H₅₇-OH et de n-C₃₀H₆₁-OH.

9. Polymères thermoplastiques usinés selon l'une quelconque des revendications 6 à 8, **caractérisés en ce que** le mélange utilisé consiste en du policosanol.

10. Utilisation de polymères thermoplastiques usinés selon l'une quelconque des revendications 6 à 9 pour la fabrication de corps plats.

11. Utilisation de polymères thermoplastiques usinés selon l'une quelconque des revendications 6 à 9 pour la fabrication de corps creux.

12. Utilisation de polymères thermoplastiques usinés selon l'une quelconque des revendications 6 à 9 pour la fabrication de profilés.
